# EUROPEAN PATENT SPECIFICATION

(11) **EP 3 492 306 B1**
(45) Date of publication and mention of the grant of the patent: **23.11.2022**
(21) Application number: 17833937.0
(22) Date of filing: 26.06.2017
(51) Int. Cl.: B60L 15/40, B61L 23/04, B61L 25/02, B61L 3/00

(54) **TRAIN AUTOMATIC STOP CONTROL DEVICE**
AUTOMATISCHE STOPP-STEUERUNGSVORRICHTUNG FÜR EINEN ZUG
DISPOSITIF DE COMMANDE D'ARRÊT AUTOMATIQUE DE TRAIN

(30) Priority: 26.07.2016 JP 2016145973
(43) Date of publication of application: 05.06.2019
(73) Proprietor: Hitachi, Ltd., Tokyo 100-8280 (JP)
(72) Inventor: ODA, Atsushi, Tokyo 100-8280 (JP); NISHINO, Takayoshi, Tokyo 100-8280 (JP); TOKUYAMA, Kazuo, Tokyo 100-8280 (JP)
(74) Representative: Mewburn Ellis LLP
(86) International application number: PCT/JP2017/023415
(87) International publication number: WO 2018/020928

(56) References cited:
- WO-A1-2015/132948
- WO-A1-2016/035597
- JP-A- H08 308 031
- JP-A- 2008 304 329
- YOSHIMOTO K ET AL: "A feasibility study of train automatic stop control using range sensors", INTELLIGENT TRANSPORTATION SYSTEMS, 2001. PROCEEDINGS. 2001 IEEE AUGUST 25-29, 2001, PISCATAWAY, NJ, USA,IEEE, 25 August 2001 (2001-08-25), pages 802-807, XP010555876, ISBN: 978-0-7803-7194-1
- SHENTON R: "Video Train Positioning", IRSE AUSTRALASIA TECHNICAL MEETING,, 18 March 2011 (2011-03-18), pages 1-8, XP003029634,

## Description

### Technical Field

The present invention relates to a train automatic stop control device configured to calculate a current position of a train from a relative distance between the train and an object installed on the ground and control the traveling of the train.

### Background Art

In recent years, burdens on train crew members are increased due to tight railroad schedules, the strictness of train stop positions for the installation of platform doors, and the like. The introduction of automatic train operations (ATOs: Automatic Train Control) has been progressed for the purpose of reducing burdens on train crew members, reducing labor costs, and the like. Train automatic stop control (TASC) devices, which are among the ATOs and are configured to accurately stop trains so that the positions of vehicle doors match the positions of platform doors, are introduced for many railroad lines with the progress of the introduction of platform doors in existing railroad stations.

Nonpatent Literature 1 that is related art discloses a configuration of a general train automatic stop control device. Specifically, the train automatic stop control device uses a device, which is installed on a vehicle and is called an on-vehicle coil, to receive positional information from a ground coil installed on the ground (in a railroad track) and configured to transmit the positional information of the ground coil. Then, the train automatic stop control device determines a current position of a target train based on the received positional information. Multiple ground coils are installed near a target stop position. The train automatic stop control device corrects the current position of the train every time the on-vehicle coil passes through a ground coil. Then, the train automatic stop control device compares the speed of the train with a speed set for the current position and indicated in a TASC pattern (data indicated by combinations of positions and speeds) held in the train automatic stop control device in advance. The train automatic stop control device stops the train at the target stop position by controlling a brake so that the speeds match each other.

### Citation List

### Nonpatent Literature

[Nonpatent Literature 1] Rolling Stock and Technology No. 181 "Traveling control technique for ATOs <5>"
[Nonpatent Literature 2] Yoshimoto K, Kataoka K, Komaya K. "A feasibility study of train automatic stop control using range sensors." In ITSC 2001. 2001 IEEE Intelligent Transportation Systems. Proceedings (Cat. No. 01TH8585) 2001 Aug 25 (pp. 802-807). IEEE proposes a train automatic stop control using range sensors.

### Summary of Invention

### Technical Problem

In a technique described in Nonpatent Literature 1, however, ground coils need to be installed as devices within a railroad track. In general, the cost of installing a railroad device largely varies depending on whether the railroad device is to be installed in or outside a railroad track. When the device is installed in the railroad track, advanced safety measures are necessary to avoid contact with a train, and the cost of installing the device is higher, compared with the case where the device is installed outside the railroad track or installed on or above a platform. Thus, when a train automatic stop control device is installed using the technique described in Nonpatent Literature 1, there is a problem that the installation is costly. In addition, there is another problem that ground coils are discretely installed and the current position cannot be continuously corrected.

The present invention has been made in consideration of the aforementioned problems, and a train automatic stop control device configured to determine a current position of a train using a device installed outside a railroad track is proposed. According to the present invention, since a device does not need to be installed in a railroad track and an on-vehicle coil is not required, the train automatic stop control device can be introduced with low cost. In addition, although the current position is discretely corrected using ground coils in a conventional technique, the current position is continuously corrected and the accuracy of the current position is improved.

### Solution to Problems

To solve the problems, a train automatic stop control device according to claim 1 is proposed.

### Advantageous Effects of Invention

According to the present invention, it is possible to stop the train at a target stop position using the device installed outside a railroad track. In addition, since the current position is continuously corrected, the accuracy of the current position is improved.

### Brief Description of Drawings

Fig. 1 is a diagram showing a configuration of a general train automatic stop control device.
Fig. 2 is a diagram showing a functional configuration of a train automatic stop control device according to a first embodiment.
Fig. 3 is a diagram showing a procedure (flowchart) for a process to be executed by speed and position calculation means (in the following: speed/position calculation means) according to the first embodiment.
Figs. 4 are diagrams showing design examples of an object used in a second embodiment.
Figs. 5 are diagrams showing an example of an image captured by a camera according to the second embodiment.

### Description of Embodiments

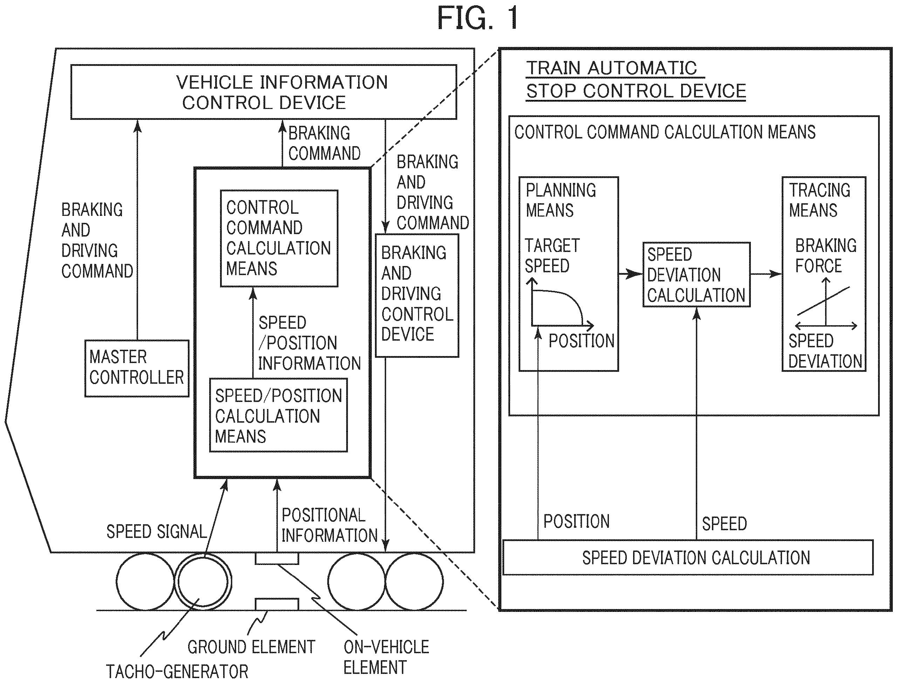

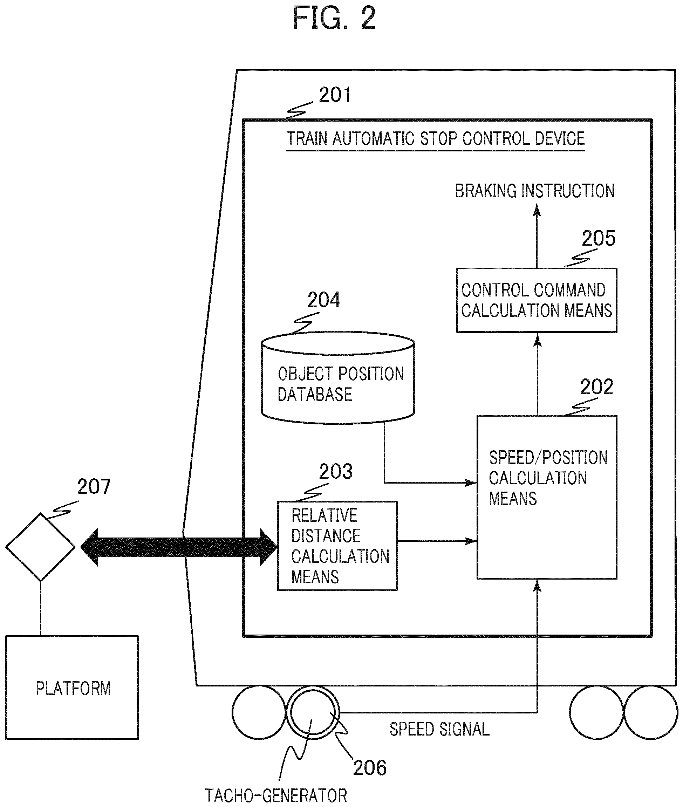

Hereinafter, embodiments of the present invention are described using the accompanying drawings. Fig. 1 is a diagram related to a train automatic stop control device (TASC device) included in a general automatic train operation (ATO) . In addition, Figs. 2 to 5 are diagrams describing train automatic stop control devices according to the embodiments of the present invention.

In addition, units shown in Figs. 1 to 5 are devices, each of which is composed of any of a processor, a storage medium, and a program, or a combination thereof. For example, the processor reads the program stored in the storage medium and enables various functions.

First, an overview of the general train automatic stop control device is described.

Fig. 1 is a diagram showing a configuration of the general train automatic stop control device. The train automatic stop control device uses speed/position calculation means to detect a speed signal from a tacho-generator installed on a wheel shaft and detects positional information from an on-vehicle coil for communicating with a ground coil. In addition, the train automatic stop control device uses control command calculation means to calculate a braking command based on the acquired speed signal and the positional information and outputs the calculated braking command to a vehicle information control device and a braking and driving control device.

As described above, the train automatic stop control device includes the speed/position calculation means configured to calculate a speed signal and positional information and the control command calculation means configured to calculate a braking command. The control command calculation means includes a planning unit having a planning function and tracing means having a tracing function.

The speed/position calculation means calculates a current position from positional information of a departure station and an integrated value of a vehicle speed. However, since an integration error is included in the integrated value of the vehicle speed, the speed/position calculation means corrects the current position to information received from a ground coil upon receiving the positional information from the ground coil. When the current position is between ground coils, the speed/position calculation means calculates the current position using the integrated value of the vehicle speed.

Next, the two functions included in the control command calculation means are described. The planning function is a function of calculating a target speed by crosschecking a braking speed before arrival at a station stop position held in advance with a current vehicle position. In addition, the tracing function is a function of receiving a speed deviation between the target speed and a current vehicle speed and calculating braking force to be output. The train automatic stop control device causes the calculated braking force to be included in a braking command and outputs the braking command including the calculated braking force to the vehicle information control device and the braking and driving control device.

Examples of the braking command are a brake notch command and a torque command. The vehicle information control device is a device configured to manage information transfer in a vehicle. When the vehicle information control device receives the braking command from the train automatic stop control device, the vehicle information control device outputs the received braking command to the braking and driving control device. The braking and driving control device controls the traveling of a train based on the received braking command.

### First Embodiment

A first embodiment describes a train automatic stop control device configured to calculate a current position of a target train based on a relative distance between the target train and an object installed in a railroad station and serving as a reference for position correction.

Fig. 2 is a diagram showing a functional configuration of the train automatic stop control device 201 according to the first embodiment. The train automatic stop control device 201 includes speed/position calculation means 202, relative distance calculation means 203, an object position database 204, and control command calculation means 205. The train automatic stop control device 201 calculates a braking command and outputs the calculated braking command to a braking and driving control device via a vehicle information control device.

The speed/position calculation means 202 acquires a speed signal indicating a rotational speed of a wheel shaft from a tacho-generator 206 installed on the wheel shaft and calculates the current position of the train from the acquired speed signal, a circumferential length of a wheel, and positional information of a station from which the train is departed. In addition, the speed/position calculation means 202 acquires the relative distance from the relative distance calculation means 203, acquires the position of the object from the object position database 204, and calculates the current position of the target train from the position of the object and the relative distance. "The current position of the target train" is hereinafter merely referred to as "current position" in some cases.

The relative distance calculation means 203 calculates a relative distance between the target train and an object 207 installed outside a railroad track (or installed on or above a platform, for example) and serving as a reference for position correction. It is sufficient if at least one object 207 is installed near a single target stop position. It is, however, desirable that multiple objects 207 be installed on or above a platform in consideration of the fact that an object 207 may not be recognized. The relative distance calculation means 203 may calculate the relative distance by causing an imaging device such as a camera to recognize an image of the object or by using radio wave irradiation with a millimeter-wave or the like or laser irradiation. In short, it is sufficient if a distance between the target train and the object 207 installed outside the railroad track is calculated, and a method for calculating the distance is not limited. In addition, when the current position is on a front side with respect to the position of a currently recognized object or when the relative distance is equal to or smaller than a predetermined threshold, the relative distance calculation means 203 switches the object to an object to be recognized next.

The control command calculation means 205 receives information of the speed and current position of the target train from the speed/position calculation means 202 and calculates a braking command from a speed deviation between the speed of the target train and a speed set for the current position and indicated in a TASC pattern.

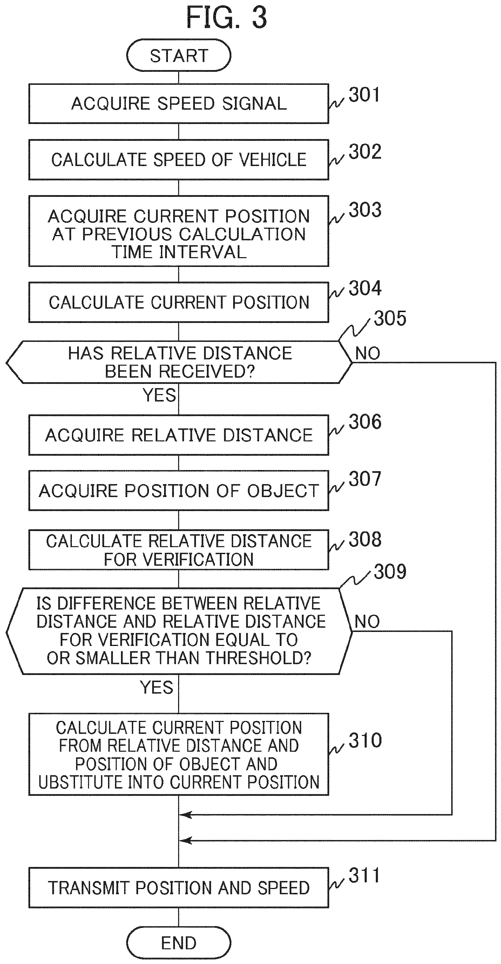

Fig. 3 is a diagram showing a procedure (flowchart) for a process of speed and position calculation to be executed by the speed/position calculation means 202. The flowchart shown in Fig. 3 is executed for each calculation time interval of the train automatic stop control device 201. A subject that executes processes of the following steps is the speed/position calculation means 202 and is omitted in descriptions of the following steps.

### (Step 301)

A speed signal is acquired from the tacho-generator 206. After that, the process proceeds to step 302.

### (Step 302)

A vehicle speed is calculated based on data indicating the acquired speed signal, the circumferential length of the wheel, and the like. After that, the process proceeds to step 303.

### (Step 303)

The current position at a previous calculation time interval is acquired. After that, the process proceeds to step 304.

### (Step 304)

The current position of the target train is calculated according to the following equation. After that, process proceeds to step 305.
(i) When the current position is changed toward a traveling direction of the target train, the current position = the current position at the previous calculation time interval + (the vehicle speed × a calculation time interval).
(ii) When the current position is changed toward a direction opposite to the traveling direction of the target train, the current position = the current position at the previous calculation time interval - (the vehicle speed × the calculation time interval).

### (Step 305)

It is confirmed whether or not the relative distance has been received from the relative distance calculation means 203. When the relative distance has been received (Yes), the process proceeds to step 306. When the relative distance has not been received (No), the process proceeds to step 311.

### (Step 306)

The relative distance is acquired from the relative distance calculation means 203. After that, the process proceeds to step 307.

### (Step 307)

The position of the object is acquired. Specifically, an object's position that is closest to the current position calculated in step 304 in the traveling direction is searched from the object position database 204 and acquired. After that, the process proceeds to step 308.

The object may be installed and dedicated for the train automatic stop control device according to the present invention or may be an already installed device such as a display for displaying a target stop position. A device that is not movable and is installed outside the railroad track can be used as the object. The shape, color, and the like of the object, and the number of objects are not limited.

### (Step 308)

A relative distance for verification is calculated. The relative distance for verification is calculated to verify whether or not the relative distance acquired in step 306 is appropriate and to compare the relative distance for verification with the relative distance acquired in step 306. Specifically, the relative distance for verification is calculated according to the following equation using the current position calculated in step 304 and the object's position acquired in step 307. After that, the process proceeds to step 309.
(i) When the current position is changed toward the traveling direction of the train, the relative distance for verification = the object's position - the current position.
(ii) When the current position is changed toward the direction opposite to the traveling direction of the train, the relative distance for verification = the current position - the object's position.

### (Step 309)

The difference between the relative distance acquired in step 306 and the relative distance, calculated in step 308, for verification is calculated. It is determined whether or not the difference is equal to or smaller than a set threshold. When the difference is equal to or smaller than the threshold (Yes), the process proceeds to step 310. On the other hand, when the difference is larger than the threshold (No), the process proceeds to step 311.

### (Step 310)

The current position is calculated according to the following equation.
(i) When the current position is changed toward the traveling direction of the train, the current position = the position of the object - the relative distance.
(ii) When the current position is changed toward the direction opposite to the traveling direction of the train, the current position = the position of the object + the relative distance.

The calculated current position is treated as a current position at a current calculation time interval. After that, the process proceeds to step 311.

### (Step 311)

Information of the current position at the current calculation time interval and information of the speed are transmitted to the control command calculation means 205.

As described above, according to the first embodiment, the device installed outside the railroad track is used to enable the train to stop a target stop point. In addition, since the current position can be continuously detected in a different manner from position detection by a ground coil, the accuracy of the current position is improved. Furthermore, the relative distance calculated by the relative distance calculation means 203 is used for the calculation of the current position after the integrity of the relative distance is confirmed by comparing the relative distance calculated by the relative distance calculation means 203 with the relative distance calculated from the current position calculated using the vehicle speed obtained from the reliable tacho-generator 206 and the position of the object. Thus, the calculated current position is reliable.

### Second Embodiment

The first embodiment describes the configuration including the relative distance calculation means that determines only the relative distance. A second embodiment describes a train automatic stop control device including relative distance calculation means capable of recognizing information other than a relative distance, while a camera is used as the relative distance calculation means. Features other than a process of acquiring an object's position are the same as or similar to those described in the first embodiment, and a description of the other features is omitted.

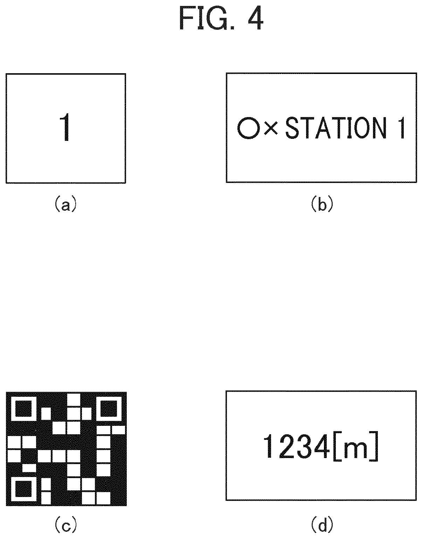

Figs. 4 are diagrams showing design examples of a display form depicted on an object used in the second embodiment. As shown in Fig. 4(a), in the case where an ID specific to the object is represented, positional information of the object currently recognized can be acquired by causing the camera to execute image recognition to recognize the ID and searching the ID from the object position database 204. In Fig. 4(a), the ID specific to the object is represented but is not limited to this. As long as a display form in which each object is associated with a respective ID is used, the ID is not limited to an alphanumeric character and may be a color, a figure, a symbol, or a pattern, or a combination thereof. In addition, as long as the shape or color of each object is associated with a respective ID, the shapes or colors of objects may vary.

In addition, as shown in Fig. 4(b), in the case where a station name and the order that the object is installed among objects installed outside the railroad track are represented, positional information of the object currently recognized can be acquired by causing the camera to execute image recognition to recognize the station name and the order that the object is installed and executing a search using the object position database 204.

In addition, as shown in Fig. 4(c), positional information of the object can be directly acquired by treating the object as a QR code (registered trademark) without referencing the object position database 204. Furthermore, as shown in Fig. 4(d), in the case where positional information of the object is directly represented, the positional information of the object can be directly acquired by causing the camera to execute image recognition to recognize the positional information without referencing the object position database 204.

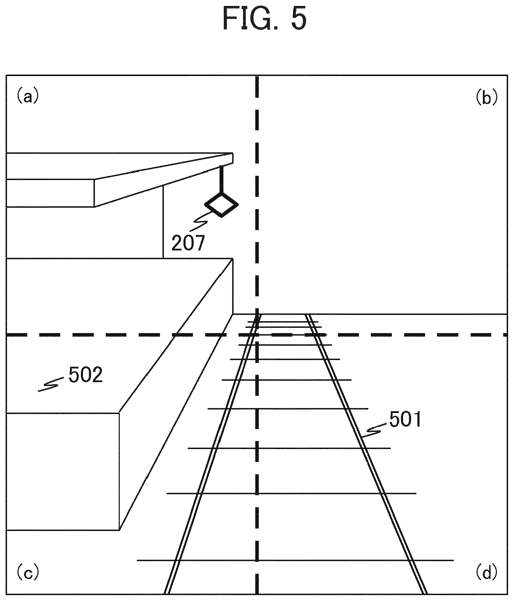

Figs. 5 are diagrams showing an example of an image recognized by the camera according to the second embodiment. At least a railroad track 501, a platform 502, and an object 207 are included in the image and exist near a target stop position, and it is necessary to recognize the object 207 from among them and calculate the relative distance. In general, a computational load of an image recognition process may be high and the computing power of the train automatic stop control device may be lower than that of a personal computer. It is, therefore, desirable that the computational load of the image recognition process be low.

According to the present invention, as described above, the position of the object to be recognized is fixedly located outside the railroad track. Thus, only a region shown in Fig. 5(a) can be treated as a region targeted for image recognition, and the computational load can be significantly reduced, compared with the case where the entire image is treated as a range to be used to recognize the object. In addition, in the case where a position at which the object is installed is limited to a position located near a roof of the platform among positions located outside the railroad track, the computational load of the image recognition process can be further reduced. The position at which the object is installed may be a position other than the position located near the roof of the platform. It is sufficient if the object is installed so that the object is located at a specific position in an image captured by the camera. The position of the object is not limited.

In addition, although the example in which the camera is installed on a front surface of a vehicle is described with reference to Figs. 5, the camera may be installed at a position other than the front surface . For example, the camera may be installed on a side surface of the train. In short, it is sufficient if the object can be recognized by the camera and the relative distance can be calculated. A position at which the camera is installed is not limited.

As described above, according to the second embodiment, the position of the object can be easily and reliably calculated. Especially, when design indicated by (c) in Fig. 4 or design indicated by (d) Fig. 4 is used, the object position database 204 is not necessary and it is possible to use a simple configuration to stop the train at a target stop point. In addition, the computational load of the image recognition process can be reduced by fixing the position of the object.

In the first and second embodiments, when the speed/position calculation means 202 does not receive input from the relative distance calculation means 203, the speed/position calculation means 202 calculates the current position based on the speed of the vehicle, but a train crew member may be notified that there is not input from the relative distance calculation means 203. Thus, the train crew member can confirm means that has calculated the current position.

In addition, when the control command calculation means 205 does not receive input from the relative distance calculation means 203 until the train approaches a target stop position, the control command calculation means 205 controls the train so that the train is stopped at a position located on the front side with respect to the target stop position. It is, therefore, possible to reliably prevent the train from moving across the target stop position and easily control the train by using inching control or by a manual operation so that the train is stopped at the target stop position.

In addition, in the case where input from the relative distance calculation means 203 is not continuous or is intermittent, the speed/position calculation means 202 may determine that the relative distance calculation means 203 has failed, and may use only the current position calculated based on the speed of the vehicle. Thus, current positions obtained by the two different calculation means are not frequently switched and it is possible to prevent hunting of the current position.

As described above, in the first embodiment and the second embodiment, the current position of the train is calculated from the relative distance between the train and the object installed outside the railroad track and the position of the object. For example, the camera installed on the side surface of the train and orientated downward recognizes the object installed on or above the platform and oriented upward and acquires positional information of the object directly from the design of the object when the camera is located on a vertical line of the object. Then, the current position of the train may be replaced with the positional information upon the acquisition of the positional information. Thus, the present invention is applicable even when there is no space for installing the object on the front side with respect to the target stop position in the traveling direction. In addition, a camera installed on the side surface and configured to monitor a platform door can be used as the camera

In addition, by comparing a change in the current position based on the vehicle speed in a certain section with a change in the current position based on the relative distance, an error (for example, the difference between an actual value of the wheel diameter and a value to be used to calculate the vehicle speed) upon the integration of the vehicle speed may be recognized and corrected. By performing this, the accuracy of the current position calculated based on the vehicle speed can be improved.

### List of Reference Signs

- 201: Train automatic stop control device
- 202: Speed/position calculation means
- 203: Relative distance calculation means
- 204: Object position database
- 205: Control command calculation means
- 206: Tacho-generator
- 207: Object
- 501: Railroad track
- 502: Platform

## Claims

1. A train automatic stop control device (201) configured to stop a train at a predetermined target stop position, comprising:
speed and position calculation means (202) for calculating a speed and current position of the train;
relative distance calculation means (203) for calculating a relative distance between an object (207) installed outside a railroad track (501) and the train; and
control command calculation means (205) for receiving information of the train's speed and current position calculated by the speed and position calculation means (202), wherein the speed and position calculation means (202) calculates the current position of the train from information of the relative distance received from the relative distance calculation means (203) and positional information of the object (207),
**characterised in that**, the control command calculation means (205) calculates a braking command from a speed deviation between the train's speed and a target speed set for the current position,
and when input from the relative distance calculation means (203) is discontinuous or is intermittent, the control command calculation means (205) calculates a braking command to stop the train at a position located on a front side with respect to the target stop position.

2. The train automatic stop control device (201) according to claim 1,
wherein the speed and position calculation means (202) acquires the positional information of the object (207) from an object position database (204).

3. The train automatic stop control device (201) according to claim 1 or 2,
wherein the relative distance calculation means (203) calculates the relative distance using image recognition by an imaging device, radio wave irradiation, or laser irradiation for the object.

4. The train automatic stop control device (201) according to any of claims 1 to 3,
wherein the speed and position calculation means (202) compares information indicating the relative distance received from the relative distance calculation means (203) with information indicating a relative distance used for the comparison and calculated from the train's current position calculated based on a train's speed calculated by the train and the positional information of the object (207),
and calculates the current position of the train from the information indicating the relative distance received from the relative distance calculation means (203) and the positional information of the object (207) when the difference between the two is equal to or smaller than a predetermined threshold.

5. The train automatic stop control device (201) according to claim 2 or one of claims 3 and 4 citing claim 2,
wherein the relative distance calculation means (203) executes image recognition on a shape or color of the object (207) or a display form depicted on the object (207), uniquely determines the object (207), and searches the object position database (204) based on information of the determined object (207).

6. The train automatic stop control device (201) according to claim 1 or one of claims 3 and 4 citing claim 1,
wherein the relative distance calculation means (203) executes image recognition on a display form depicted on the object (207) and uniquely determines the positional information of the object (207).

7. The train automatic stop control device (201) according to any of claims 1 to 6,
wherein the speed and position calculation means (202) switches the calculation to the calculation of the current position of the train based on the speed of the train when input from the relative distance calculation means (203) is discontinuous or is intermittent.

8. The train automatic stop control device (201) according to any of claims 1 to 7,
wherein a plurality of objects (207) is installed as the object (207) outside a railroad track (501), and
the relative distance calculation means (203) switches the object (207) for calculating the relative distance from one of the objects (207) to a different object (207) if the relative distance between one of the plurality of objects (207) and the train has become equal to or smaller than a predetermined threshold.

## Patentansprüche

1. Steuervorrichtung (201) für automatisches Anhalten von Zügen, die ausgelegt ist, um einen Zug an einer vorbestimmten Anhalteposition anzuhalten, und die Folgendes umfasst:
ein Geschwindigkeits- und Positionsberechnungsmittel (202) zur Berechnung einer Geschwindigkeit und einer aktuellen Position des Zugs;
ein Relativdistanzberechnungsmittel (203) zur Berechnung einer relativen Distanz zwischen einem Objekt (207), das außerhalb einer Bahnstrecke (501) installiert ist, und dem Zug; und
ein Steuerbefehlsberechnungsmittel (205) zum Empfangen von Informationen in Bezug auf die Geschwindigkeit und die aktuelle Position des Zugs, die von dem Geschwindigkeits- und Positionsberechnungsmittel (202) berechnet wurden,
wobei das Geschwindigkeits- und Positionsberechnungsmittel (202) die aktuelle Position des Zugs anhand von Informationen in Bezug auf die Relativdistanz, die es von dem Relativdistanzberechnungsmittel (203) empfangen hat, und anhand von Positionsinformationen des Objekts (207) berechnet,
**dadurch gekennzeichnet, dass** das Steuerbefehlberechnungsmittel (205) einen Bremsbefehl anhand einer Geschwindigkeitsabweichung zwischen der Geschwindigkeit des Zuges und einer für die aktuelle Position festgelegten Zielgeschwindigkeit berechnet,
und das Steuerbefehlberechnungsmittel (205), wenn die Eingabe von dem Relativdistanzberechnungsmittel (203) diskontinuierlich oder intermittierend ist, einen Bremsbefehl berechnet, um den Zug an einer Position anzuhalten, die sich in Bezug auf die Zielanhalteposition an einer Vorderseite befindet.

2. Steuervorrichtung (201) für automatisches Anhalten von Zügen nach Anspruch 1,
wobei das Geschwindigkeits- und Positionsberechnungsmittel (202) die Positionsinformationen des Objekts (207) von einer Objektpositionsdatenbank (204) bezieht.

3. Steuervorrichtung (201) für automatisches Anhalten von Zügen nach Anspruch 1 oder 2,
wobei das Relativdistanzberechnungsmittel (203) die Relativdistanz mittels Bilderkennung durch eine Bildgebungsvorrichtung, Radiowellenbestrahlung oder Laserbestrahlung des Objekts berechnet.

4. Steuervorrichtung (201) für automatisches Anhalten von Zügen nach einem der Ansprüche 1 bis 3,
wobei das Geschwindigkeits- und Positionsberechnungsmittel (202) Informationen, die die Relativdistanz angeben und von dem Relativdistanzberechnungsmittel (203) empfangen wurden, mit Informationen vergleicht, die eine Relativdistanz angeben, die für den Vergleich verwendet und anhand der aktuellen Position des Zugs berechnet wird, die auf Grundlage einer durch den Zug berechneten Geschwindigkeit des Zugs und der Positionsinformationen des Objekts (207) berechnet wird,
und die aktuelle Position des Zugs anhand von Informationen, die die Relativdistanz angeben und von dem Relativdistanzberechnungsmittel (203) empfangen werden, und anhand der Positionsinformationen des Objekts (207) berechnet wird, wenn die Differenz zwischen den beiden kleiner oder gleich einem vorbestimmten Schwellenwert ist.

5. Steuervorrichtung (201) für automatisches Anhalten von Zügen nach Anspruch 2 oder einem der Ansprüche 3 und 4, die Anspruch 2 zitieren,
wobei das Relativdistanzberechnungsmittel (203) Bilderkennung in Bezug auf eine Form oder Farbe des Objekts (207) oder eine auf dem Objekt (207) dargestellte Anzeigeform ausführt, das Objekt (207) eindeutig bestimmt und die Objektpositionsdatenbank (204) auf Grundlage der Informationen in Bezug auf das bestimmte Objekt (207) durchsucht.

6. Steuervorrichtung (201) für automatisches Anhalten von Zügen nach Anspruch 1 oder einem der Ansprüche 3 und 4, die Anspruch 1 zitieren,
wobei das Relativdistanzberechnungsmittel (203) Bilderkennung in Bezug auf eine Anzeigeform ausführt, die auf dem Objekt (207) dargestellt ist, und die Positionsinformationen des Objekts (207) eindeutig bestimmt.

7. Steuervorrichtung (201) für automatisches Anhalten von Zügen nach einem der Ansprüche 1 bis 6,
wobei das Geschwindigkeits- und Positionsberechnungsmittel (202) die Berechnung auf die Berechnung der aktuellen Position des Zugs auf Grundlage der Geschwindigkeit des Zuges wechselt, wenn die Eingabe von dem Relativdistanzberechnungsmittel (203) diskontinuierlich oder intermittierend ist.

8. Steuervorrichtung (201) für automatisches Anhalten von Zügen nach einem der Ansprüche 1 bis 7,
wobei eine Vielzahl von Objekten (207) als das Objekt (207) außerhalb einer Bahnstrecke (501) installiert ist und
das Relativdistanzberechnungsmittel (203) das Objekt (207) zur Berechnung der Relativdistanz von einem Objekt (207) zu einem anderen Objekt (207) wechselt, wenn die Relativdistanz zwischen einem aus der Vielzahl von Objekten (207) und dem Zug kleiner oder gleich einem vorbestimmten Schwellenwert geworden ist.

## Revendications

1. Dispositif de commande d'arrêt automatique de train (201) configuré pour arrêter un train à dans une position d'arrêt cible prédéterminée, comprenant :
un moyen de calcul de vitesse et de position (202) pour calculer une vitesse et une position actuelle du train ;
un moyen de calcul de distance relative (203) pour calculer une distance relative entre un objet (207) installé à l'extérieur d'une voie ferrée (501) et le train ; et
un moyen de calcul d'instruction de commande (205) pour recevoir des informations sur la vitesse et la position actuelle du train calculées par le moyen de calcul de vitesse et de position (202),
dans lequel le moyen de calcul de vitesse et de position (202) calcule la position actuelle du train à partir d'informations de la distance relative reçues du moyen de calcul de distance relative (203) et d'informations de position de l'objet (207),
**caractérisé en ce que** le moyen de calcul d'instruction de commande (205) calcule une instruction de freinage à partir d'un écart de vitesse entre la vitesse du train et une vitesse cible définie pour la position actuelle,
et lorsque l'entrée provenant du moyen de calcul de distance relative (203) est discontinue ou intermittente, le moyen de calcul d'instruction de commande (205) calcule une instruction de freinage pour arrêter le train dans une position située sur un côté avant par rapport à la position d'arrêt cible.

2. Dispositif de commande d'arrêt automatique de train (201) selon la revendication 1,
dans lequel le moyen de calcul de vitesse et de position (202) acquiert les informations de position de l'objet (207) à partir d'une base de données de positions d'objet (204) .

3. Dispositif de commande d'arrêt automatique de train (201) selon la revendication 1 ou 2,
dans lequel le moyen de calcul de distance relative (203) calcule la distance relative en utilisant une reconnaissance d'image par l'intermédiaire d'un dispositif d'imagerie, un rayonnement d'ondes radio, ou un rayonnement laser pour l'objet.

4. Dispositif de commande d'arrêt automatique de train (201) selon l'une quelconque des revendications 1 à 3,
dans lequel le moyen de calcul de vitesse et de position (202) compare des informations indiquant la distance relative reçue du moyen de calcul de distance relative (203) avec des informations indiquant une distance relative utilisée pour la comparaison et calculée à partir de la position actuelle du train calculée sur la base de la vitesse d'un train calculée par le train et des informations de position de l'objet (207),
et calcule la position actuelle du train à partir des informations indiquant la distance relative reçue depuis le moyen de calcul de distance relative (203) et des informations de position de l'objet (207) lorsque la différence entre les deux est égale ou inférieure à un seuil prédéterminé.

5. Dispositif de commande automatique d'arrêt de train (201) selon la revendication 2 ou l'une quelconque des revendications 3 et 4 citant la revendication 2,
dans lequel le moyen de calcul de distance relative (203) exécute une reconnaissance d'image sur une forme ou une couleur de l'objet (207) ou une forme d'affichage représentée sur l'objet (207), détermine de manière unique l'objet (207), et effectue une recherche dans la base de données de positions d'objet (204) sur la base d'informations de l'objet déterminé (207).

6. Dispositif de commande automatique d'arrêt de train (201) selon la revendication 1 ou l'une quelconque des revendications 3 et 4 citant la revendication 1,
dans lequel le moyen de calcul de distance relative (203) exécute une reconnaissance d'image sur une forme d'affichage représentée sur l'objet (207) et détermine de manière unique les informations de position de l'objet (207) .

7. Dispositif de commande d'arrêt automatique de train (201) selon l'une quelconque des revendications 1 à 6,
dans lequel le moyen de calcul de vitesse et de position (202) commute le calcul sur le calcul de la position actuelle du train sur la base de la vitesse du train lorsqu'une entrée provenant du moyen de calcul de distance relative (203) est discontinue ou intermittente.

8. Dispositif de commande d'arrêt automatique de train (201) selon l'une quelconque des revendications 1 à 7,
dans lequel une pluralité d'objets (207) est installée en tant qu'objet (207) à l'extérieur d'une voie ferrée (501), et
le moyen de calcul de distance relative (203) commute l'objet (207) afin de calculer la distance relative entre l'un des objets (207) et un objet différent (207) si la distance relative entre l'un de la pluralité d'objets (207) et le train est devenue égale ou inférieure à un seuil prédéterminé.
